# EUROPEAN PATENT SPECIFICATION

(11) **EP 1 934 384 B1**
(45) Date of publication and mention of the grant of the patent: **02.11.2011**
(21) Application number: 06798546.5
(22) Date of filing: 28.08.2006
(51) Int. Cl.: C23C 22/00

(54) **COATING METHOD OF METAL OXIDE SUPERFINE PARTICLES ON THE SURFACE OF METAL OXIDE AND COATING PRODUCED THEREFROM**
VERFAHREN ZUM BESCHICHTEN DER OBERFLÄCHE VON METALLOXID MIT SUPERFEINEN METALLOXIDTEILCHEN UND DARAUS HERGESTELLTE BESCHICHTUNG
PROCEDE DE REVETEMENT DE PARTICULES SUPERFINES D'OXYDE DE METAL SUR LA SURFACE D'OXYDE DE METAL ET REVETEMENT A PARTIR DE CES PARTICULES

(30) Priority: 08.09.2005 KR 20050083801
(43) Date of publication of application: 25.06.2008
(73) Proprietor: HANWHA CHEMICAL CORPORATION, Seoul 100-797 (KR)
(72) Inventor: MYEONG, Wan-Jae, Daejeon, 305-509 (KR); LEE, Joo-Hyeong, Daejeon, 305-721 (KR); SONG, Kyu-Ho, Daejeon, 302-777 (KR)
(74) Representative: Lins, Martina
(86) International application number: PCT/KR2006/003374
(87) International publication number: WO 2007/029933

(56) References cited:
- JP-A- 10 067 503
- JP-A- 10 067 503
- JP-A- 2002 136 880
- JP-A- 2003 027 051
- US-B1- 6 194 650
- US-B1- 6 592 938
- US-B1- 6 592 938

## Description

### Technical Field

The present invention relates to a method of coating the surface of metal oxide particles with ultrafine metal oxide particles and a coating produced thereby, and more particularly, to a method of coating the surface of metal oxide particles with ultrafine metal oxide particles, in which coating particles are uniformly applied in the form of nano-sized ultrafine particles, compared to conventional metal oxide coated with ultrafine metal oxide particles, and to a coating produced thereby.

### Background Art

The present invention aims to provide a method of coating the surface of metal oxide particles with ultrafine metal oxide particles, and a coating produced thereby.

Examples of the coating prepared by the method of the present invention include i) CeO₂ coated with ZrO₂, having high resistance to poisonous material such as a sulfur component to thus be suitable for use in a catalyst for the purification of exhaust gas of diesel vehicles, ii) cathode active material, such as LiCoO₂ coated with ZrO₂, having improved thermal stability and cycle properties to thus be useful as cathode active material in a lithium ion secondary battery, iii) CeO₂ coated with CaO, having improved whiteness to thus be suitable for use in a UV-blocking agent, and iv) CeO₂ coated with SiO₂, which has improved dispersibility and is thus suitable for use as slurry for the chemical-mechanical planarization of a semiconductor wafer.

As conventional techniques for coating the surface of metal oxide with ultrafine metal oxide particles, an evaporation-drying type coating process has mainly been employed. In the case of a catalyst for the purification of exhaust gas of vehicles, precious metal, such as Pt, Pd or Rh, need be dispersed as small as possible through a loading process onto alumina or ceria, in order to increase reaction efficiency.

US Patent No. 6,787,500 discloses a method of coating CeO₂ particles with PtO₂ ultrafine particles through the evaporation of two or more precursor solutions in a vacuum. However, this method is unsuitable for mass production due to the use of a vacuum device..

In addition, US Patent No. 6,773,814 discloses a method of coating silica ultrafine particles by mixing metal oxide with tetraalkoxysilane and ammonia in the form of an aqueous solution and then drying the mixture, to decrease the catalytic activity of metal oxide particles (having a size of 0.1∼1 µm) such as TiO₂ or ZnO, which serve as UV-blocking agents.

Yuan et al. (Z. Yuan et al, Materials Letters, 46 (2000), 249-254) disclose a method of preparing zirconia coated with ceria, comprising mixing zirconia particles with an aqueous cerium nitrate solution and ethanol and then evaporating the solvent to thus produce more stabilized zirconia which is added with ceria.

### Disclosure

### Technical Problem

As is apparent from the conventional techniques for coating the surface of a metal oxide with another metal oxide, a coating layer is mainly formed at low temperatures. Accordingly, the coating layer, which is in the form of amorphous metal hydroxide or amorphous metal oxide, should be subjected to high-temperature treatment for oxidation or crystallization. In such a case, however, the undesirable effect of the specific surface US 6,592,938 B1 discloses a method for coating particles, wherein the particles to be coated and at least one organo-metallic complex precursor of the coating material are brought into contact with each other in a liquid containing one or several solvents. The temperature and pressure conditions are such that supercritical pressure or slightly subcritical pressure conditions are met. The solvent is then removed by evaporation, and coated particles are obtained.

JP 10 067503 A discloses the coating of a powder, i.e. powdered carbonyl iron with a metal oxide. The coating is made by heating a metal alkoxide solution and a powered carbonyl iron dispersed therein and thereafter performing a hydration reaction.

area being drastically decreased by the increase in particle size or the fusion of pores occurs.

Therefore, leading to the present invention, intense and thorough research into method of coating metal oxide with ultrafine metal oxide particles, carried out by the present inventors aiming to avoid the problems encountered in the related art, led to the development of a coating method, comprising bringing metal oxide into contact with an aqueous metal salt solution and then mixing the contacted mixture solution with subcritical water or supercritical water to thus cause a subcritical or supercritical reaction, such that ultrafine metal oxide particles are formed on the surface of metal oxide to realize a core and shell structure.

An object of the present invention is to provide a method of coating the surface of metal oxide particles with ultrafine metal oxide particles and a coating produced thereby.

### Technical Solution

In order to accomplish the above object, the present invention provides a coating method, comprising i) bringing metal (M1) oxide into contact with an aqueous solution of a metal (M2) salt to be applied thereon, and ii) continuously mixing and reacting the contacted metal oxide with water at a reaction temperature of 200∼700°C under pressure of 180∼550 bar

Preferably, the method further comprises adding a precipitant between steps i) and the ii).

Preferably, the precipitant is ammonia water.

The metal (M1) of the metal (M1) oxide is not particularly limited, and preferably includes at least one selected from Groups IA, IB, IIA, IIB, IIIA, IIIB, IVA, IVB, VA, VB, VIA, VIB, VIIA, VIIB, VIII, transition metals, lanthanides, and actinides in the periodic table. In particular, the metal useful in the present invention is exemplified by at least one selected from Si, Al, Li, Mg, Ca, Sr, Ba, Y, Nb, La, Ti, Zr, Cr, Mo, W, Mn, Fe, Co, Ni, Cu, Zn, Ce, and Pr.

Further, the metal (M2) of the metal salt to be applied is not particularly limited, and preferably includes Groups IA, IB, IIA, IIB, IIIA, IIIB, IVA, IVB; VA, VB, VIA, VIB, VIIA, VIIB, VIII, transition metals, lanthanides, and actinides in the periodic table. In particular, the metal useful in the present invention is exemplified by Si, A1, Sc, Ga, Li, Mg, Ca, Sr, Ba, Y, Nb, La, Ti, Zr, Cr, Mo, W, Mn, Fe, Ru, Rh, Pd, Ir, Pt, Co, Ni, Cu, Ag, Zn, Cd, Ce, Pr, Nd, Sm, Eu, and Gd.

Preferably, the metal (M2) salt is not particularly limited, as long as it is in an aqueous form and includes nitrate, oxalate, or citrate.

Preferably, when bringing the metal (M1) oxide into contact with the aqueous solution of the metal (M2) salt, a surfactant, which may be selectively attached to both the metal (M1) oxide and the metal (M2) salt to be applied, or metal (M2) ions dissociated in an aqueous solution, for example, acrylic acid, carboxylic acid, amino acid, and polymers or salts thereof, may be further added. In particular, an aqueous polymer salt is preferable.

Preferably, the mixing and reacting are conducted in a continuous manner using a line mixer.

Preferably, the above method further comprises performing drying and calcination. The drying process may be performed through a typical drying process, for example, spray drying, convection dying, or fluidized-bed drying, at a temperature of 300°C or lower. In the case of requiring an increase in the size of dried particles or crystals or a sintering, calcination process in oxidation or reduction atmosphere, or in the presence of water may be further performed at 400∼1500°C, depending on the type of material. As such, the calcination effect is poor at a temperature of less than 400°C, whereas excess sintering occurs at a temperature exceeding 1500°C.

In addition, the present invention provides a coating, produced using the above method and having a structure in which the surface of metal oxide constituting a core is coated with ultrafine metal oxide particles, the metal oxide particles of the core having a particle size from 5 nm to 5 µm, and the ultrafine metal oxide particles, constituting a coating layer, having a particle size from 1 nm to 100 nm.

### Advantageous Effects

Compared to conventional metal oxide coated with ultrafine metal oxide particles, the material obtained using the present technique is advantageous because coating particles are uniformly applied in the form of nano-sized ultrafine particles. Since the present material is synthesized by subjecting a metal salt, which is previously attached to the surface of metal oxide, to a supercritical or subcritical high-temperature and high-pressure process such that nuclei thereof are formed on the surface of metal oxide particles and thus grown into crystals, the synthesized crystals are in the form of nano-sized ultrafine particles and are applied to realize a core and shell structure.

### Description of Drawings

FIG. 1 is a scanning electron micrograph (SEM) (100,000 magnified) of metal oxide particles prepared in Example 1;
FIG. 2 is an SEM (100,000 magnified) of metal oxide particles prepared in Example 2;
FIG. 3 is an SEM (100,000 magnified) of metal oxide particles prepared in Comparative Example 1; and
FIG. 4. is an SEM (50,000 magnified) of metal oxide particles prepared in Comparative Example 2.

### Best Mode

Hereinafter, a detailed description will be given of the present invention.

According to the present invention, the reaction is performed at a reaction temperature of 200∼700°C under reaction pressure of 180∼550 bar, and preferably at a reaction temperature of 300∼500°C under reaction pressure of 200∼400 bar. As such, if the reaction temperature is lower than 200°C or the reaction pressure is less than 180 bar, the reaction rate is decreased, and the solubility of the resulting oxide is relatively high, and hence the degree of recovery into a precipitate is lowered. On the other hand, if the reaction temperature and the reaction pressure are too high, economic benefits are negated.

The metal oxide particles, which constitute the core of a coating obtained by the method of the present invention, have a particle size from 5 nm to 5 µm, and preferably from 10 nm to 2 µm. If the particle size is smaller than 5 nm, it is difficult to coat the surface of such particles with ultrafine particles. On the other hand, if the particle size is larger than 5 µm, it is not easy to operate the preparation device. In addition, the ultrafine metal oxide particles, constituting a coating layer, have a particle size from 1 nm to 100 nm, and preferably from 2 nm to 50 nm. When the particle size is smaller than 1 nm, excess agglomeration occurs and a uniform coating process is difficult to realize. On the other hand, when the particle size is larger than 100 nm, the resultant coating layer is nonuniform, undesirably deteriorating the coating benefit.

Examples of the coating prepared by the method of the present invention include i) CeO₂ coated with ZrO₂, having high resistance to poisonous material such as sulfur components, and thus being suitable for use in a catalyst for the purification of exhaust gas of diesel vehicles, ii) cathode active material, such as LiCoO₂, coated with **ZrO₂,** having improved thermal stability and cycle properties, and thus being useful as cathode active material in a lithium ion secondary battery, iii) CeO₂ coated with CaO, having improved whiteness, and thus being suitable for use in a UV-blocking agent, and iv) CeO₂ coated with SiO₂, which has improved dispersibility to thus be suitable for use as slurry for the chemical-mechanical planarization of a semiconductor wafer.

### Mode for Invention

A better understanding of the present invention may be obtained through the following examples which are set forth to illustrate, but are not to be construed as the limit of the present invention.

### Example 1

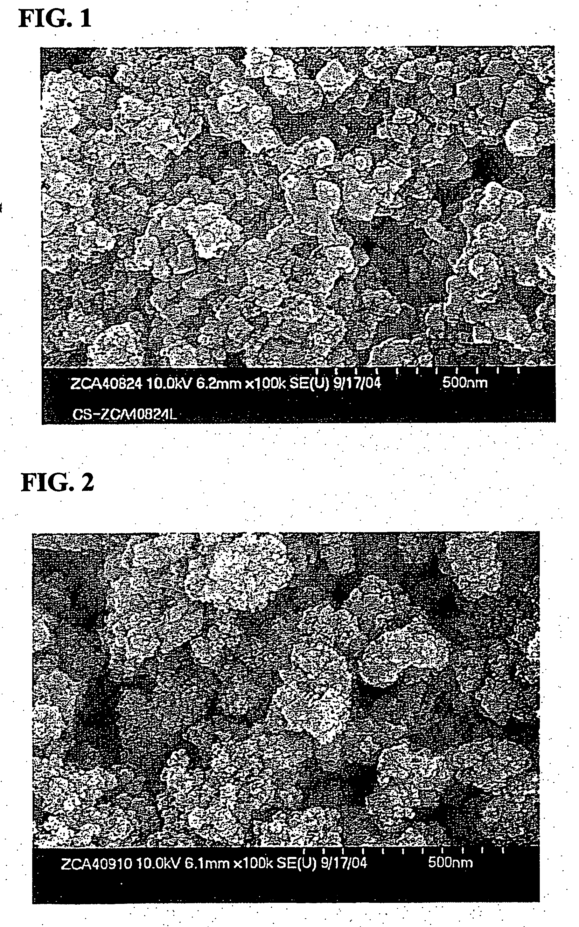

70 g of CeO₂ particles (particle size of 20∼50 nm) having a specific surface area of 24 m²/g were dispersed in water to prepare 1.0 kg of slurry, which was then mixed with 65.1 g of zirconyl nitrate (ZrO(NO₃)₂·2H₂O). This mixed slurry was pumped at a rate of 8 g per min through a tube having an outer diameter of 6.35 mm (1/4 inch), and was then pressurized at 250 bar. Further, deionized water was pumped at a rate of 96 g per min through a tube having an outer diameter of 1/4 inch, preheated to 550°C, and pressurized at 250 bar. Subsequently, the preheated deionized water and the mixed slurry, which were in a pressurized state, were pumped into a continuous line reactor to thus be instantly mixed. The temperature of the resultant reaction mixture was maintained at 400°C. The particles produced after the reaction were cooled and separated. The particles thus obtained were filtered, dried at 100°C for 10 hours, and analyzed using XRF(X-ray fluorescence spectrometry), FESEM(Field Emission Scanning Electron Microscope), and BET surface area analyzer. As the result of analysis of composition through XRF, CeO₂ and ZrO₂ were determined to be 65.7 wt% and 34.3 wt%, respectively. In addition, as the result of analysis through FESEM, as in FIG. 1, zirconia particles could be seen to be well dispersed on the surface of ceria crystals. The specific surface area of the dried particles was measured through BET surface area analyzer and thus found to be 83 m²/g, which was considered relatively high. The ceria of the core had a particle size from 50 nm to 200 nm, and the zirconia of the shell had a particle size from 2 nm to 10 nm.

### Example 2

70 g of CeO₂ particles (particle size of 20~50 nm) having a specific surface area of 24 m²/g and 5.6 g of a polymer surfactant (Disperbyk 154, available from BYK Chemie) were dispersed in water to prepare 1.0 kg of slurry, which was then mixed with 65.1 g of zirconyl nitrate (ZrO(NO₃)₂·H₂O), therefore making a mixed slurry. Subsequently, the particles were obtained in the same manner as in Example 1. The particles thus obtained were filtered, dried at 100°C for 10 hours, and analyzed using XRF, FESEM, and BET surface area analyzer. As the result of analysis of composition through XRF, CeO₂ and ZrO₂ were determined to be 61.2 wt% and 38.8 wt%, respectively. In addition, as the result of analysis through FESEM, as in FIG. 2, zirconia particles could be seen to be well dispersed on the surface of ceria crystals. The specific surface area of the dried particles was measured through BET surface area analyzer and thus found to be 89 m²/g, which was considered relatively high. The ceria of the core had a particle size from 50 nm to 200 nm, and the zirconia of the shell had a particle size from 2 mn to 10 nm.

### Comparative Example 1

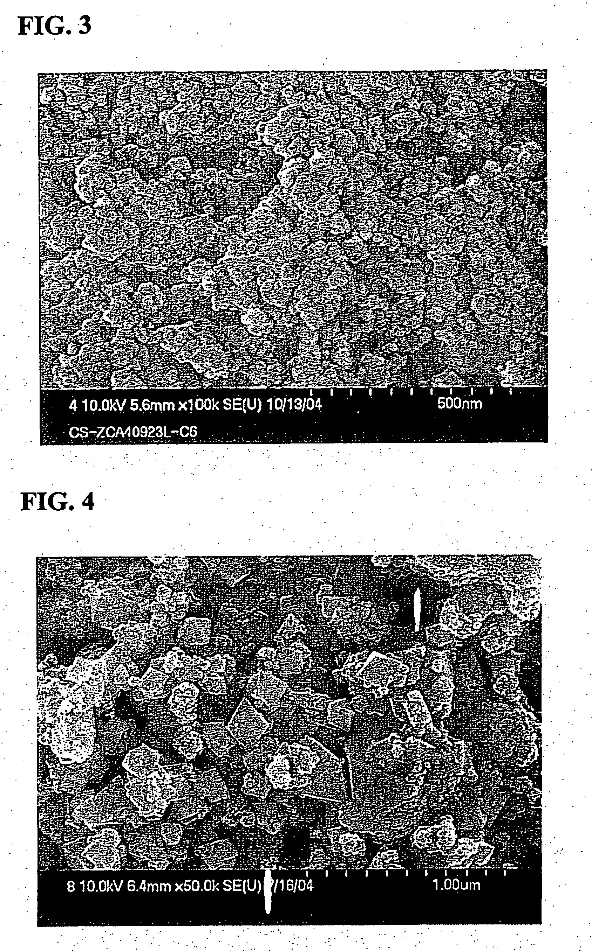

70 g of CeO₂ particles (particle size of 20~50 nm) having a specific surface area of 24 m²/g were dispersed in water to prepare 1.0 kg of slurry, which was then mixed with 65.1g of zirconyl nitrate (ZrO(NO₃)₂·2H₂O) Such mixed slurry was sprayed using a spray dryer, thus obtaining particles. The particles thus obtained were calcined at 600°C for 6 hours such that a zirconyl compound present on the surface of a core was oxidized in the form of zirconia. The calcined particles were analyzed using XRF, FESEM, and BET surface area analyzer. As the result of analysis of composition through XRF, CeO₂ and ZrO₂ were determined to be 68.5 wt% and 31.5 wt%, respectively. In addition, as the result of analysis through FESEM, as shown in FIG. 3, a zirconia layer was sintered on the surface of ceria crystals. The specific surface area was measured to be 29 m²/g, which was similar to the specific surface area of the supplied CeO₂. Accordingly, it was difficult to apply such a coating in a field requiring a high specific surface area. Further, the sizes of the respective particles constituting the core and shell were difficult to analyze due to the excess sintering of zirconia present on the surface of ceria.

### Comparative Example 2

11.18 wt% of an aqueous cerium nitrate solution (Ce(NO₃)₃-6H₂O) was pumped at a rate of 8 g per min through a tube having an outer diameter of 6,35mm(1/4 inch) and pressurized. at 250 bar. 13 wt% of ammonia water (28 wt% NH₃) was pumped at a rate of 8 g per min through a tube having an outer diameter of 1/4 inch and pressurized at 250 bar. The pressurized aqueous cerium nitrate solution and the pressurized ammonia water were pumped into a tube-shaped continuous line mixer 1 to thus be instantly mixed, and were then allowed to precipitate for a residence time of about 20 sec. Further, 4.06 wt% of an aqueous zirconyl nitrate solution was pumped at a rate of 8 g per min through a tube having an outer diameter of 1/4 inch, pressurized at 250 bar, and pumped into a line mixer 2 to thus be instantly mixed with the precipitate resulting from the line mixer 1, after which the obtained mixture was allowed to precipitate for a residence time of about 20 sec. Furthermore, deionized water was pumped at a rate of 96 g per min through a tube having an outer diameter of 1/4 inch, preheated to 550°C, and pressurized at 250 bar. Subsequently, the deionized water thus preheated and the precipitate produced from the line mixer 2, which were in a pressurized state, were pumped into a continuous line reactor to thus be instantly mixed. The resultant reaction fixture, the temperature of which was maintained at 400°C, was allowed to react for a residence time of 10 sec or less. The slurry produced after the reaction was cooled and the particles were separated. The separated particles were dried in an oven at 100°C, and analyzed using XRF, FESEM, and BET surface area analyzer. As the result of analysis of composition through XRF, CeO₂ and ZrO₂ were determined to be 65 wt% and 35 wt%, respectively. The specific surface area was determined to be 62 m²/g. As the result of analysis through FESEM, as in FIG. 4, it could be seen that two metal oxides, comprising ceria (large octagonal particles) and zirconia (agglomerated spherical particles), were mixed in a state of being isolated from each other. Although the particle size of the ceria was determined to be in the range from 50 nm to 600 nm, the particle size of the zirconia was difficult to analyze due to the excess agglomeration.

### Example 3

1 g of each of the samples of Examples 1 and 2 and Comparative Example 2, each of which had a relatively high specific surface area and was thus suitable for use in a catalyst, was added to 100 ml of 70% nitric acid aqueous solution at room temperature, and stirred for 76 hours. The stirred solution was poured onto a glass filter, and the remnant on the filter was dried and weighed. The results are shown in Table 1. The ceria was dissolved little by little in 70% nitric acid aqueous solution, whereas zirconia was not dissolved therein. Therefore, in the case where the surface of ceria was uniformly coasted with zirconia, the amount of filtration remnants increased after the treatment in the nitric acid aqueous solution, by the zirconia functioning to prevent contact between the ceria of the core and the nitric acid aqueous solution. In the samples of Examples 1 and 2, less ceria was dissolved thanks to the protection of zirconia of the coating layer, and therefore the amount of remnants was relatively high. However, in the sample of Comparative Example 2, some of the ceria of the core was dissolved and the amount of remnants was low.

**TABLE 1**

| | Ex. 1 | Ex. 2 | C.Ex. 2 |
|---|---|---|---|
| Remnant (g) | 0.91 | 0.93 | 0.61 |

## Claims

1. A method of coating a surface of metal oxide particles with ultrafine metal oxide particles, comprising:
i) bringing metal (M1) oxide particles into contact with an aqueous solution of a metal (M2) salt to be applied thereon; and
ii) continuously mixing and reacting the contacted metal oxide particles with water at a reaction temperature of 200~700°C under pressure of 180~550 bar.

2. The method according to claim 1, further comprising adding a precipitant between the) and the ii).

3. The method according to claim 2, wherein the precipitant is ammonia water.

4. The method according to claim 1, wherein metal (M1) of the metal (M1) oxide is at least one selected from among Si, Al, Li, Mg, Ca, Sr, Ba, Y, Nb, La, Ti; Zr, Cr, Mo, W, Mn, Fe, Co, Ni, Cu, Zn, Ce, and Pr.

5. The method according to claim 1, wherein metal (M2) of the metal (M2) salt is at least one selected from among Si, Al, Sc, Ga, Li, Mg, Ca, Sr, Ba, Y, Nb, La, Ti, Zr, Cr, Mo, W, Mn, Fe, Ru, Rh, Pd, Ir, Pt, Co, Ni, Cu, Ag, Zn, Cd, Ce, Pr, Nd, Sm, Eu, and Gd.

6. The method according to claim 1, wherein the metal (M2) salt is nitrate, oxalate, or citrate.

7. The method according to claim 1 wherein the i) further comprises adding acrylic acid, carboxylic acid, amino acid, polymers or salts thereof, or mixtures thereof

8. The method according to claim 1, wherein the ii) is performed using a continuous line mixer.

9. The method according to claim 1, further comprising performing drying and calcination.

## Patentansprüche

1. Verfahren zur Beschichtung einer MetalloxidpartikeloberFläche mit ultrafeinen Metalloxidteilchen, umfassend:
i) in Kontaktbringen von Metall(Ml)oxidpartikeln mit einer wässrigen Lösung eines Metall(M2)salzes, das darauf aufgebracht werden soll; und
ii) kontinuierliches Mischen und Reagieren lassen der in Kontakt gebrachten Metalloxidpartikel mit Wasser bei einer Reaktionstemperatur von 200 - 700 °C unter einem Druck von 180 -550 bar.

2. Verfahren nach Anspruch 1, weiterhin die Zugabe eines Fällungsmittels zwischen i) und ii) umfassend.

3. Verfahren nach Anspruch 2, worin das Fällungsmittel Ammoniakwasser ist.

4. Verfahren nach Anspruch 1, worin das Metall (M1) des Metall(M1)oxids wenigstens ein Metall ausgewählt aus Si, Al, Li, Mg, Ca, Sr, Ba, Y, Nb, La, Ti, Zr, Cr, Mo, W, Mn, Fe, Co, Ni, Cu, Zn, Ce und Pr ist.

5. Verfahren nach Anspruch 1, worin das Metall (M2) des Metall(M2)salzes wenigstens ein Metall ausgewählt aus der Gruppe Si, Al, Sc, Ga, Li, Mg, Ca, Sr, Ha, Y, Nb, La, Ti, Zr, Cr, Mo, W, Mn, Fe, Ru, Rh, Pd, Ir, Pt, Co, Ni, Cu, Ag, Zn, Cd, Ce, Pr, Nd, Sm, Eu und Gd ist.

6. Verfahren nach Anspruch 1, worin das Metall(M2)salz Nitrat, Oxalat oder Zitrat ist.

7. Verfahren nach Anspruch 1, worin i) weiterhin die Zugabe von Acrylsäure, Carboxylsäure, Aminosäure, Polymeren oder Salzen davon, oder Mischungen dieser Substanzen umfasst.

8. Verfahren nach Anspruch 1, worin ii) unter Verwendung eines kontinuierlichen Bohrmischers durchgeführt wird.

9. Verfahren nach Anspruch 1, weiterhin die Durchführung von Trocknung und Calcination umfassend.

## Revendications

1. Procédé de revêtement de la surface de particules d'oxyde métallique avec des particules d'oxyde métallique ultrafines, comprenant :
i) la mise en contact de particules d'oxyde d'un métal (M1) avec une solution aqueuse de sel d'un métal (M2) à appliquer par-dessus ; et
ii) le mélange et la réaction continus des particules d'oxyde métallique mises en contact avec l'eau à une température de réaction de 200-700 °C sous une pression de 180-550 bars.

2. Procédé selon la revendication 1, comprenant en outre l'addition d'un agent de précipitation entre le i) et le ii).

3. Procédé selon la revendication 2, dans lequel l'agent de précipitation est l'ammoniaque.

4. Procédé selon la revendication 1, dans lequel le métal (M1) de l'oxyde d'un métal (M1) est au moins un élément choisi parmi Si, Al, Li, Mg, Ca, Sr, Ha, Y, Nb, La, Ti, Zr, Cr, Mo, W, Mn, Fe, Co, Ni, Cu, Zn, Ce et Pr.

5. Procédé selon la revendication 1, dans lequel le métal (M2) du sel d'un métal (M2) est au moins un élément choisi parmi Si, Al, Sc, Ga, Li, Mg, Ca, Sr, Ba, Y, Nb, La, Ti, Zr, Cr, Mo, W, Mn, Fe, Ru, Rh, Pd, Ir, Pt, Co, Ni, Cu, Ag, Zn, Cd, Ce, Pr, Nd, Sm, Eu et Gd.

6. Procédé selon la revendication 1, dans lequel le sel du métal (M2) est un nitrate, un oxalate ou un citrate.

7. Procédé selon la revendication 1, dans lequel le i) comprend en outre l'addition d'un acide acrylique, d'un acide carboxylique, d'un acide aminé, de polymères ou sels de ceux-ci, ou de mélanges de ceux-ci.

8. Procédé selon à revendication 1, dans lequel le ii) est effectué en utilisant un mélangeur continu en ligne.

9. Procédé selon la revendication 1, comprenant en outre la réalisation d'un séchage et d'une calcination.
